# EUROPEAN PATENT SPECIFICATION

(11) **EP 0 792 100 B1**
(45) Date of publication and mention of the grant of the patent: **22.01.2003**
(21) Application number: 95939986.6
(22) Date of filing: 14.11.1995
(51) Int. Cl.: A01N 25/28, A01N 43/80

(54) **LOW VOLATILITY FORMULATIONS OF CLOMAZONE**
WENIG FLÜCHTIGE FORMULIERUNGEN VON CLOMAZONE
FORMULATIONS DE CLOMAZONE A FAIBLE VOLATILITE

(30) Priority: 16.11.1994 US 340699; 21.09.1995 US 531499
(43) Date of publication of application: 03.09.1997
(73) Proprietor: FMC CORPORATION, Philadelphia, PA 19103 (US)
(72) Inventor: LEE, Fui-Tseng, Huang, Princeton, NJ 08540 (US); NICHOLSON, Paul, Trenton, NJ 08618 (US)
(74) Representative: W.P. Thompson & Co.
(86) International application number: PCT/US95/14871
(87) International publication number: WO 96/014743

(56) References cited:
- US-A- 3 577 515
- US-A- 4 280 833
- US-A- 4 497 793
- US-A- 4 936 901
- US-A- 5 006 161

## Description

The present invention relates to formulations of clomazone having reduced volatility relative to conventional emulsifiable concentrates of clomazone. In particular it relates to microencapsulated formulations of clomazone in which the clomazone is encapsulated in a shell of polyurea.

Clomazone, the common name for 2-(2-chlorophenyl)methyl-4,4-dimethyl-3-lsoxazolinone, a highly effective herbicide, is also highly volatile, so much so that clomazone applied to the soil in a target area may move to adjacent areas and there cause discoloration, most typically whitening or some degree of bleaching, of a variety of crops, trees, or decorative plants. While this bleaching, indicative of the mode of action of the herbicide, may be temporary when plants are exposed to sufficiently low concentrations, it is unwelcome, even when it does not result in the destruction of the plant. Accordingly, the label for the use of Command® 4 EC Herbicide. an. emulsifiable concentrate formulation in commercial use that contains 8.25kg/litre (four pounds of clomazone per gallon of formulation, lists a number of restrictions on how the product is to be used, including weather conditions, spray volume and pressure, and distance from areas where plants are in commercial production. For example, for preemergent applications clomazone is not to be applied within 457 m (1,500 feet) of commercial fruit, mut, or vegetable production or commercial greenhouses or nurseries. Clearly; this is a severe limitation on the use of an herbicide.

It is the purpose of the present invention to reduce the volatility of clomazone formulations, so that problem of off-site injury is significantly reduced, i.e., by at least fifty percent, while maintaining a satisfactory level of herbicidal activity in the target area.

Attempts to prepare formulations of encapsulated clomazone by the general methods known to the art, including polyamide shells as well as polyurea, frequently resulted in formulations that not only gave little or no reduction in volatility, but had poor physical characteristics, e.g., undesirable agglomeration of the capsules or separation of phases. Perhaps one factor accounting for the difficulty in preparing satisfactory formulations is the significant water solubility of clomazone. No reports of formulations of encapsulated clomazone have been found.

It has now been found that encapsulated formulations of clomazone for which the volatility is reduced to fifty percent or less than that of the commercially available Command® 4 EC emulsifiable concentrate of clomazone, and which retain a satisfactory level of herbicidal activity, can be prepared, provided that the isocyanate and amine moieties that are to form the polyurea shell wall are carefully selected.

The process of the invention involves the following steps: (a) providing an aqueous phase containing an emulsifier, preferably a partially hydrolyzed polyvinyl alcohol; an antifoam agent, and optionally a xanthan gum viscosity modifier/stabilizer; (b) providing a water immiscible phase consisting of clomazone and polymethylene polyphenyl isocyanate, with or without a hydrocarbon solvent; (c) emulsifying the water immiscible phase in the aqueous phase to form a dispersion of water-immiscible droplets throughout the aqueous phase; (d) agitating the dispersion while adding to it, either neat or in aqueous solution, ethylenediamine, diethyltriamine, triethylenetetramine, 1,6-hexanediamine, or a mixture of the polyfunctional amines, thus forming a polyurea shell wall around the water-immiscible droplets. Once the microcapsules are formed, the suspension is cured by moderate heating.

According to one aspect of the present invention there is provided a process for the preparation of herbicidally effective formulations of clomazone having a volatility less than fifty percent of the volatility of an emulsifiable concentrate of clomazone containing four pounds of clomazone per gallon of formulation which comprises microencapsulating the clomazone by interfacial polymerization by the steps of:
a) providing an aqueous phase containing 0.3 to 3.0 wt% of one or more emulsifiers;
b) providing a water immiscible phase consisting of clomazone, polymethylene polyphenyl isocyanate (PMPPI), and a hydrocarbon solvent; the weight ratio of clomazone to PMPPI being in the range of 1:1 to 6:1;
c) emulsifying the water immiscible phase in the aqueous phase, forming a dispersion of water immiscible droplets throughout the aqueous phase;
d) agitating the dispersion while adding thereto an aqueous solution of 10 to 100 weight percent of at least one polyfunctional amine selected from ethylenediamine (EDA), diethyltriamine (DETA), triethylenetetramine (TETA), and 1,6-hexanediamine (HDA), with the proviso that (EDA) is used only in a mixture, the weight ratio of polyfunctional amine to PMPPI being in the range of 0.1:1 to 1:1, thus forming microcapsules having a polyurea shell wall around the water immiscible droplets; and
e) curing the microcapsules by continuing the agitation while heating the dispersion at a temperature in the range of 35° to 60°C for a period of 3 to 10 hours to produce a formulation in which the average size of the microcapsules is in the range of 5 to 50 microns.

According to another aspect of the invention there is provided a process for the preparation of herbicidally effective formulations of clomazone having a volatility less than fifty percent of the volatility of an emulsifiable concentrate of clomazone containing four pounds of clomazone per gallon of formulation which comprises microencapsulating the clomazone by interfacial polymerization by the steps of:
a) providing an aqueous phase containing 0.5 to 3.0 wt% of one or more emulsifiers;
b) providing a water immiscible phase consisting of clomazone, polymethylene polyphenyl isocyanate (PMPPI), and a hydrocarbon solvent; the weight ratio of clomazone to PMPPI being in the range of 1:1 to 6:1;
c) emulsifying the water immiscible phase in the aqueous phase, forming a dispersion of water immiscible droplets throughout the aqueous phase;
d) agitating the dispersion while adding thereto at least one polyfunctional amine selected from diethyltriamine (DETA), triethylenetetramine (TETA) and 1,6-hexanediamine (HDA), the weight ratio of polyfunctional amine to PMPPI being in the range of 0.1:1 to 1:1, thus forming microcapsules having a polyurea shell wall around the water immiscible droplets; and
e) curing the microcapsules by continuing the agitation while heating the dispersion at a temperature in the range of 35° to 60°C for a period of 3 to 10 hours. After curing one or more stabilizing agents, such as propylene glycol, zanthan gum, smectite clay, or an ionic dispersing agent such as a sulfonate of an alkyl napthalene, may be added, as is well-known in the art. It has also been found that adjusting the pH of the formulation from mildly acidic to mildly akaline conditions, such as a range of from 6.5 to 9.0, e.g., pH 8.9, results in a formulation having improved storage stability. The addition of these materials after encapuslation and curing to adjust viscosity and suspensibility is not seen to have any effect on the loss of clomazone through volatility or on the herbicidal efficacy of the formulation.

According to a further aspect of the invention there is provided a process for the preparation of an herbicidally effective clomazone composition comprising:
(a) microencapsulating clomazone by interfacial polymerization to form plural cured microcapsules comprising a polyurea shell wall surrounding encapsulated material comprising clomazone, wherein said herbicidally effective clomazone composition has a clomazone volatility less than fifty per cent of the volatility of an emulsifiable concentrate of clomazone, and wherein microencapsulating comprises:
   forming a dispersion of plural uncured microcapsules, each comprising a polyurea shell wall surrounding an encapsulated material comprising clomazone, by emulsifying an aqueous phase comprising water and an emulsifier and a water immiscible phase comprising polymethylene polyphenyl isocyanate (PMPPI) and clomazone and adding at least one polyfunctional amine selected from the group consisting of ethylenediamine (EDA), diethyltriamine (DETA), triethylenetetramine (TETA), and 1,6-hexanediamine (HDA), with the proviso that EDA is used only in the presence of a second polyfunctional amine.

According to yet a further aspect of the invention there is provided a herbicidal formulation prepared according to a process of this invention.

According to a still further aspect of this invention there is provided a herbicidal formulation containing from 1 to 4 pounds of clomazone per gallon of formulation and having a volatility less than fifty percent of the volatility of an emulsifiable concentrate of clomazone containing four pounds of clomazone per gallon of formulation, comprising:
(a) an aqueous suspension of microcapsules made up of a polyurea shell surrounding a core of clomazone and a minor amount of a hydrocarbon solvent, the polyurea having been formed from the interfacial reaction of polymethylene polyphenyl isocyanate (PMPPI) with ethylenediamine (EDA), diethylenetriamine (DETA), triethylenetetramine (TETA), or 1,6-hexanediamine (HDA), or a mixture of the polyfunctional amines, with the proviso that EDA is used only in a mixture;
b) 0.2 to 1.00 wt% polyvinyl alcohol;
c) 0.1 to 0.5 wt% antifoam agent; and
d) 0.75 to 7.0 wt% propylene glycol, the average size of the microcapsules being in the range of 5 to 50 microns and having a suspensibility of greater than 70%, a viscosity of 1700 to 3800 cps, and a 100 mesh wet screen analysis of greater than 99.95%.

According to a further aspect of the invention there is provided a herbicidal composition of microencapsulated clomazone comprising: a polyurea shell forming microcapsules; and encapsulated material within said shell, said encapsulated material comprising an herbicidally effective amount of clomazone; wherein said composition has a clomazone volatility less than fifty percent of the volatility of an emulsifiable concentrate of clomazone, said polyurea shell being formed by an interfacial polymerization of polymethylene polyphenyl isocyanate and one or more polyfunctional amines selected from the group consisting of ethylenediamine (EDA), diethyltriamine (DETA), triethylenetetramine (TETA), and 1,6-hexanediamine (HDA), with the proviso that (EDA) is used only in the presence of a second polyfunctional amine.

The aqueous phase will ordinarily contain 0.3 to 3.0, preferably 0.8 to 2.0, weight percent of one or more emulsifiers, e.g., polyvinyl alcohol, 0.02 to 0.20, preferably 0.06 to 0.15, weight percent of the zanthan gum viscosity modifier/stabilizer, if it is used, and 0.1 to 1.0, preferably 0.4 to 0.9, weight percent of the antifoam agent.

The water-immiscible phase will ordinarily consist of 60 to 85, preferably 65 to 77, weight percent of clomazone, an amount of polymethylene polyphenyl isocyanate (PMPPI) such that the ratio of clomazone to PMPPI is in the range of 1:1 to 6:1, preferably 4.5:1 to 4.8:1, and an aromatic hydrocarbon solvent for the two solutes. However, use of solvent is optional in the preparation of formulations containing more than about two pounds of clomazone per gallon of formulation. In such preparations a small amount of solvent may still be used to depress the melting point.

The amine solution will ordinarily contain 10 to 100, preferably 30 to 40, weight percent of ethylenediamine, diethylenetriamine, triethylenetetramine, 1,6-hexanediamine, or preferably a mixture of the polyfunctional amines, with ethylene diamine being used only in a mixture.

The emulsification step requires high shear mixing to give small droplets of the immiscible phase. Factors that influence droplet size, which determines the eventual size of the microcapsules, as well as the stability of the emulsion, include speed and length of mixing, the type and amount of surfactant, solvent, temperature, and viscosity, as well as the xanthan gum, when used. Selection of the appropriate microcapsule size to achieve the purposes of the invention requires a balance between competing factors. In general, increasing microcapsule size decreases volatility, but also decreases suspensibility of the particles, while decreasing size yields better suspensibility, but higher volatility. For the purposes of the present invention the average size of the microcapsules is 5 to 50 microns, preferably 5 to 30 microns. The operating conditions to yield microcapsules of a desired size will depend on the emulsifying equipment used, and the adjustment to determine the proper conditions is well within the skill of the art.

In contrast to the conditions of the emulsification step, agitation during the amine addition should be gentle. Stirring is continued while the suspension is cured by heating to a temperature of 35 to 60, preferably 45 to 50 °C, for 3 to 10, preferably 4 to 5, hours.

The amounts of post encapsulation additives to be added typically would be selected from one or more of 0.75 to 6.5 wt% propylene glycol, 0.05 to 0.30 (more preferably 0.07 to 0.3) wt.% xanthan gum, 0.25 to 0.50 wt.% smectite clay, and 0.5 to 6.0 wt.% one or more surfactants, each weight percent relative to the weight of the formulation after addition of the stabilizers.

The formulations of the present invention are prepared by the methods exemplified in the following examples.

### Example 1

### Preparation of a Clomazone 3.09kg/litre (1.5 Pound/Gallon) Capsule Suspension (1.5 CS) Formulation (Formulation A)

A stock solution of aqueous 20% (weight/weight) partially hydrolyzed polyvinyl alcohol having an average molecular weight of 13,000 to 23,000 (Airvol® 203) was prepared by stirring and heating the appropriate amounts of polyvinyl alcohol and water at about 80-90 °C for one hour. The cooled solution was stored for later use.

In a one-liter stainless steel beaker were placed 20.0 grams of the aqueous 20% polyvinyl alcohol solution prepared above, 1.8 grams of 100 % of a polydimethyl siloxane antifoam agent (Dow Coming® 1500), 15.0 grams of aqueous 2% xanthan gum (Kelzan® M), and 400.0 grams of water. After this mixture was mixed for 20 seconds at high speed in a high-shear mixer, a pre-blended solution of 140.0 grams of clomazone, 30.0 grams of polymethylene polyphenyl isocyanate (PMPPI, Mondur® MR), and 30.0 grams of petroleum solvent (a mixture of C₉-C₁₅ aromatic, naphthalene-depleted, hydrocarbons, flash-point 95 °C, Aromatic 200 ND) was added, and the mixture was emulsified in the high shear mixer for five minutes. The mixture was then placed in a one-liter jacketed resin flask with the jacket pre-heated to 50 °C. The mixture was stirred at a moderate speed with an air-powered stirrer, and a solution of 19.0 grams of triethylenetetramine (TETA) in 35.0 grams of water was added in one portion. The mixture was then stirred at 50 °C for four hours. After this time, 2.5 grams of a smectite clay containing magnesium aluminum silicate, titanium dioxide, and cristobalite (Veegum® Ultra), and 15.0 grams of aqueous 2% xanthan gum (Kelzan® M) were added to stabilize the formulation. The formulation was then stirred for about one hour and stored for later use.

The formulations described in Tables 1 and 2 were prepared in this manner.

### Example 2

### Large Scale Preparation of a Clomazone 4.12kg/litre (2.0 Pound/Gallon) Capsule Suspension (2.0 CS Formulation (Formulation E-1)

A solution of 2.38kg (5.24 pounds) of polyvinyl alcohol (Airvol 203), 1.08kg (2.38 pounds) of an aqueous solution of 20% polydimethyl siloxane antifoam agent (Dow Corning® 1520) and 0.095kg (0.21 pound) of xanthan gum viscosity modifier/stabilizer (Kelzan® S) in 128.91kg (284.20 pounds) of water was placed in a 2273 litre (500 gallon) stainless steel vessel, and stirred at 80°C for one hour. After this time the solution was cooled to 20°C and placed in a 364 litre (80 gallon) batch homogenizer. With the homogenizer in operation, a pre-blended solution of 73.18kg (161.34 pounds) of technical clomazone, 15.76kg (34.75 pounds) of polymethylene polyphenyl isocyanate (PMPPI, Mondur® MR), and 15.76kg (34.75 pounds) of petroleum solvent (a mixture of c₉-C₁₅ aromatic hydrocarbons, flash-point 95°C, Aromatic 200) was fed by gravity into the homogenizer during a 15 to 90 second period. The mixture was homogenized for two to three minutes. Upon completion of the homogenization, the mixture was placed in a jacketed reactor with the jacket pre-heated to 50°C. To the jacketed reactor was added, over a period of 30 seconds, an amine mixture consisting of 4.98kg (10.97 pounds) of triethylenetetramine (TETA) and 4.98kg (10.97 pounds) of 1,6-hexanediamine (HDA). After the amine addition was completed, the mixture was cured with agitation at 25 °C to 50°C during a four hour period. At the end of the curing period 16.19kg (35.70 pounds) of propylene glycol and 0.54kg (1.19 pounds) of xanthan gum were added to stabilize the formulation. The formulation was then cooled to below 30°C and stored for later use. It had a viscosity of 1870 cps and a suspensibility of 82%. Both formulations described in Tables 3 and 4 were prepared in the manner of Example 2. Formulation A-1 is a larger scale version of Formulation A, and Formulation E-1 is a larger scale version of Formulation E.

Formulation P, a 6.19kg per litre (three pound per gallon) formulation, the components of which are given in Tables 3 and 4, was prepared by the method of Example 2. In this preparation 0.06kg (0.133 pound) of the sodium sulfonated naphthalene condensate was added to the aqueous phase during its preparation. The post encapsulation additives, including the remainder of the sodium sulfonated naphthalene condensate, was added after the curing period at about 35°C, while the formulation continued to mix and cool to ambient temperature. The hydrochloric acid was then added to bring the pH from 10.8 to 8.9.

The currently preferred practice, after the curing step, is to continue stirring the formulation until the temperature reaches about 35 °C, and then to add the hydrochloric acid to bring the pH to about 7.8. The post encapsulation additives, including the remainder of the sodium sulfonated naphthalene condensate, is added, and stirring of the formulation is continued for about 30 minutes to give a homogeneous mixture.

In subsequent preparations of Formulation E by the method of Example 1, certain refinements in the procedure have been found advantageous. Adjusting the pH of the aqueous solution to 4 reduced the undesirable reaction between PMPPI and water, as did cooling the solution to 8-10 °C. Preparations have also been carried out with the clomazone solution and the amine solution, as well as the initial aqueous solution, all cooled to 8-10 °C. However, when there is no solvent in the water-immiscible phase, low temperatures are not used to avoid freezing the clomazone.

Other formulations prepared by the method of Example 1, but differing from the formulations of the invention in the components of either the isocyanate- or amine-containing phase, proved to be unsatisfactory in controlling the volatility of clomazone or in the physical stability of the formulation. The compositions of representative unsatisfactory formulations are given in Table 5. Three of these formulations failed to control the volatility of clomazone adequately, as will be shown below. Formulation O was too viscous (6360 cps).

Formulation L is the same as Formulation A of the present invention, except that the polymethylene polyphenyl isocyanate (PMPPI) was replaced with toluene diisocyanate (TDI). TDI is more reactive in water than PMPPI, which causes undesirable side-reactions leading to foaming in the emulsification step of the preparation of this formulation.

Formulation M was an attempt to copy the formulation used successfully in an effective, 8.25 kg/litre (four pound/gallon) capsule suspension formulation of an insecticide, substituting clomazone for the insecticide. The microcapsules produced were too small, and here, too, TDI caused foaming problems.

Formulation N is the same as Formulation A of the present invention, except that the xanthan gum viscosity modifier/stabilizer is not used in the emulsification step. Batches of Formulation N prepared in this way gave microcapsules that not only are somewhat small, but are not uniform in size and tend to aggregate. Moreover, the formulation has poor physical stability, resulting in phase separation.

That attaining the desired combination of reduced volatility, physical properties, and efficacy is not achieved simply by following the prior art is shown by two additional preparations. Formulations V and W were prepared by the method of US Patent 4,280,833, Example 8. The composition of these formulations is given in Table 5a. Both formulations separated on standing, forming in the bottom of the container a hard-packed layer, which could be redispersed by shaking. Each gave at least as much release of clomazone as the standard Command® 4 EC Herbicide, when subjected to the laboratory volatility test described below.

The average size of the microcapsules of formulations of the invention, as well as the unsatisfactory formulations, is given in Table 6.

### Volatility Studies

Laboratory tests for the volatility of capsule suspension (CS) formulations of clomazone were carried out in the following manner. Sufficient unsterilized topsoil to conduct the test was passed twice through a 14-mesh sieve to remove large particles and debris. The fine particles were then removed through a 30-mesh sieve, leaving behind topsoil of intermediate-sized particles. This intermediate-sized topsoil, 240 grams, was spread uniformly to a thickness of about one to two millimeters over an area of about 27.9 cm. x 41.3 cm in a tray measuring 32.4 cm x 45.7 x 1.9 cm. The topsoil was then sprayed from an overhead track sprayer calibrated to deliver 20 gallons of water per acre. The spray mix consisted of sufficient clomazone test formulation to provide 0.0712 gm of active ingredient in 20 mL of water. In this manner the clomazone test formulation was applied to the soil at a rate of 1.0 kg a.i. (active ingredient)/ha. Immediately after treatment, the soil was enclosed in a glass jar, where it remained briefly until used.

For each clomazone test formulation, four 22 mm X 300 mm glass chromatography columns, each containing a coarse sintered glass barrier at the bottom, were connected through their bottom ends to a multi-port air manifold, which delivered equal air pressure simultaneously to a number of columns. In each of the four columns was placed 59 gms of the treated topsoil, which filled about 200 mm of the column length. In the top of each column was then placed a polyurethane foam plug designed to fit inside a 21 to 26 mm diameter tube. As soon after the soil treatment as the columns could be set up, a slow stream of air (0.75-1.00 liter per minute per column) from the multi-port air manifold was passed through the soil in each column, causing the volatilized clomazone to collect on the polyurethane foam plug. The time between the soil treatment and the start of the air flow was about one hour. The air flow was continued for about 18 hours.

Following the 18 hour collection period, the polyurethane foam plug from each column was placed in a 20 mL plastic syringe. The polyurethane foam plug was thoroughly extracted by drawing 15 mL of methanol into the syringe and through the plug, forcing the methanol extract into a beaker, and repeating the process several times. A 0.04 mL aliquot of the 15 mL sample was diluted with 0.96 mL of methanol and 1.0 mL of water. A 0.1 mL aliquot of this solution was analyzed for clomazone content using an enzyme-linked immunosorbent assay (ELISA), a method reported by R. V. Darger et al. (J. Agr. and Food Chem., 1991, *39*, 813-819). The total clomazone content of the foam plug, expressed in micrograms, of each sample was recorded and compared to the clomazone content of the sample from the standard, Command® 4 EC Herbicide.

The test results, given in Table 7, show that the CS formulations of the present invention are effective in reducing the amount of clomazone lost by volatility. While all of the formulations listed gave a significant reduction in volatility, the results for Formulations E and F, prepared from mixtures of TETA and HDA, are particularly noteworthy, losing only 8% and 10%, respectively, as much clomazone as was lost from the standard 4 EC. The 4.12 kg/litre (2.0 lb/gal) formulations made from the single polyfunctional amines, Formulation B from TETA and Formulation D from HDA, each lost more than twice as much clomazone as did the formulations prepared from mixtures. Also, Formulations G and H each had less volatility loss than that of either HDA or DETA alone (Formulations D and K). Accordingly, in the preparation of the formulations of this invention, the use of mixtures of DETA or TETA or both with HDA, particularly in ratios of 3:1 to 1:3, give unexpectedly superior reduction of volatility. Mixtures of TETA and EDA give volatility lower than that of TETA alone. However, it should be noted that Formulation P, a 6.19 kg/litre (3 lb/gal) formulation, with DETA alone, gave as much reduction in volatility as Formulations G and H.

The unsatisfactory formulations L, M, and N are clearly far less effective in reducing the volatility of clomazone. The high volatility loss for Formulation L (91% of that lost by the standard clomazone 4.0 EC) suggests that the polymeric walls formed from triethylenetetramine (TETA) and TDI are too permeable, allowing the clomazone to volatilize and the walls formed from PMPPI and TETA or PMPPI in combination with TETA and 1,6-hexanediamine (HDA) are much less permeable, so that clomazone loss from volatility is much reduced. Formulation M, which gives excellent results when the active ingredient is a less water-soluble insecticide, is totally unacceptable for clomazone, giving volatility equal to that of the standard clomazone 4.0 EC. The difference between Formulations A and N in reducing the loss of clomazone through volatility is particularly surprising, inasmuch as the only difference is the absence of xanthan gum in the aqueous solution prior to encapsulation in Formulation N. The function of xanthan gum seems unpredictable, however, since the only difference between Formulations K and O is the presence of xanthan gum in the aqueous solution prior to encapsulation in K. These two formulations have the same volatility loss, but the viscosity of Formulation K is 3640 cps, while that of O is 6360! No discernible difference has been found between Kelzan® M and Kelzan S xanthan gum in the aqueous phase prior to encapsulation in their effect on the formulations.

Formulations V and W, based on the an earlier patent, were no better than the 4 EC formulation in controlling volatility.

Tests to determine the volatility of clomazone CS formulations in the field relative to that of the standard, Command® 4 EC Herbicide were carried out as follows. One trial on Formulation A-1 was conducted in a field of two-week old sunflowers, a plant species susceptible to clomazone. Plots were established on a 12 X 14 meter grid. Each plot was prepared by removing the sunflower seedlings and other vegetation from areas about 60 cm in diameter located at the intersections of the grid lines. The grid lines were 12 meters apart in one direction and 14 meters apart in the perpendicular direction. The edge of one replicate was at least 12 meters from the edge of the next replicate, a distance sufficient to prevent interference between replicates. Over each plot where the soil was exposed was placed a 60 cm diameter, open-ended barrel that was lined with a plastic sleeve fashioned from a trash can liner. Each plot was sprayed with 10-15 mL of an aqueous dispersion containing 0.12 gram of active ingredient. To minimize the drift of clomazone, the spraying was conducted inside the barrel using a hand-held sprayer. Upon completion of each application, the barrel was left in place, and the top was covered for about two to three minutes to allow the spray to settle to the soil surface. The barrel was then removed, leaving each plot open to ambient conditions. There were three to four replicates for each test formulation. To prevent cross-contamination, the plastic sleeve was replaced before applying each new test formulation. The test was evaluated at seven days after treatment by measuring the distance from the center of each plot to, first, the most distant point where discoloration of the sunflowers could be found, then at 45° intervals around the center of the plot The area of discoloration of the sunflowers was calculated, and the area of the direct treatment was subtracted to provide the area affected by the volatility of clomazone.

A second test on Formulation A-1 was carried out in the same manner in a second field of sunflowers, this time with a 44 cm barrel and on a 14 X 14 meter grid. The total areas affected by clomazone movement from each test site for each test formulation and the standard clomazone 4.0 EC formulation were determined. From these data a percent reduction of area discolored by clomazone as compared to the standard Command® 4 EC was calculated for each test formulation.

A third test, this time with Formulation P, was a series of tests, carried out in different geographic locations having different environmental and soil conditions. At each location a three acre plot was planted with sunflowers. The clomazone formulations were applied to 3.05mx3.05m (10'x10') bare ground plot when the sunflowers had reached the 2-6 leaf stage. Prerequisite conditions for application were that the soil be moist, but not saturated, to facilitate volatilization. Evaluations were made 7-10 days after application and 10-14 days after the first significant rainfall event by means of the same general method described for the first test. The areas given are totals for all sites; the percent reduction is an average of those from all sites. The test results, given in Table 8, show that Formulation A-1 reduced by one half the area affected by clomazone compared to Command 4 EC, and Formulation P was significantly more effective in reducing volatility..

### Efficacy Studies

Seeds of bamyardgrass (*Echinochloa crusgalli*), giant foxtail (*Setaria faberi*), yellow foxtail (*Setaria lutescens*), shattercane (*Sorghum bicolor*), and velvetleaf (*Abutilon theophrasti*) were planted in a 25 cm x 15 cm x 7.5 cm fiber flat containing topsoil. Each species was planted as a single row in the flat, which contained five rows. There were four replicate flats of plants for each rate of application of test formulation. Stock dispersions of each of the test formulations were prepared by dispersing a sufficient amount of formulation to provide 0.0356 gram of active ingredient in 40 mL of water. From the stock dispersion 20 mL was removed and serially diluted with 20 mL of water to provide application rates of 0.25, 0.125, 0.0625, 0.0313, 0.0156, and 0.0078 kg. a.i./ha. The dispersions of test formulation for each rate of application were then sprayed onto the surface of the soil by a track-sprayer in a sprayhood. Flats were also sprayed as above with the same rates of the standard Command® 4 EC Herbicide. Untreated controls were also included in each test. Upon completion of the spraying the flats were placed in a greenhouse, where they were maintained for fourteen days. After this time the test was visually evaluated for percent weed control. The percent weed control data for each test formulation and the Command 4 EC Herbicide formulation was subjected to regression analysis to determine the rate of application that would provide 85% weed control (ED₈₅) of each of the weed species. From these data the relative potencies of the test formulations (the relative potency of the Command 4 EC Herbicide is 1.0) were determined by means of the following ratio:$\text{Formulation Relative Potency =} \frac{{\text{Formulation ED}}_{\text{85}}}{{\text{Command Herbicide ED}}_{\text{85}}}$ The test results shown in Table 9 show relatively poor performance for Formulation E in the greenhouse. As shown below, performance of Formulation E in the field was excellent. The reason for the difference between greenhouse and field performance is not understood. However, the greenhouse performance of Formulation P was excellent, as was performance in the field, as shown below.

In a field test of the efficacy of Formulation A-1 the test formulations were sprayed onto the surface of the soil (preemergence) at an application rate of 0.18kg/hectare (1.0 pounda.i./acre) in 3.87m x 9.14m (12.7 x 30 foot) plots planted with cotton and weed seeds. There were four replicate plots for each formulation tested. The test formulation was applied by means of a backpack sprayer, equipped with flat fan spray nozzles, at a delivery volume of 27- 36.8 litres/hectare (15-20 gallons/acre) and at a spray pressure of 1.93 x 10⁻³ (28-30 psi). The plots were evaluated for percent weed control at 15 and 30 days after emergence of the plant species in the test. The cotton plants were evaluated for bleaching, stunting, and stand reduction. Test results, given in Table 10, show this CS formulation to be slightly less effective against three of the four test species and essentially equivalent to the 4 EC in effects on cotton. (The similarity in effect on cotton is not unexpected, since this test is the result of direct application and does not involve movement to an adjacent site).

In a field test of Formulation E the test formulations were sprayed onto the surface of the soil (preemergence) at application rates of 0.023, 0.046, and 0.092 kg/hec (0.125, 0.25, and 0.5 pound a.i./acre) in 2.04m x 3.66m (6.7 x 12 foot) plots planted with eight different plant species. There were four replicate plots for each formulation tested. The test formulations were applied using a backpack sprayer, equipped with four flat fan spray nozzles, at a delivery volume of 36.8 litres/hectare (20 gallons/acre) and at a spray pressure of 1.72 x 10⁻³ (25 psi). The plots were evaluated for percent control 20 days after treatment. The data in Table 11 show that this CS formulation at 22.7g (0.5 pound) active ingredient per acre is giving commercial control, defined as at least 80 to 85 percent control of all species, everywhere the standard is giving commercial control, except for shattercane at 91.8g.hectare (0.5 lb/A), which falls slightly below the percentage goal for control.

Table 12 reports results of a field test of Formulation P and the 4 EC formulation in which both formulations were applied at 16.5 g/hectare (0.88 lb/A), preemergence. It is apparent that in most cases where the 4EC formulation is giving commercial control, Formulation P is also. Again, the effect of the encapsulated formulation P on cotton is negligible.

Table 13 reports another field test of Formulation P, again applied preemergence, that shows that at 161.5g/hectare (0.51b/A) the encapsulated formulation is controlling all species except shattercane.

As noted above, the stabilizers added after encapsulation and curing are thought to have no effect on the volatility or the efficacy of the formulation. They are added to stabilize the formulation and adjust the viscosity. It is prefered that each formulation of this invention have a suspensibility of greater than 70%, a viscosity of 1700 to 3800 cps, and a 100 mesh wet screen analysis of greater than 99.95%.

It is understood that there may be variations from the specific embodiments described herein without departing from the spirit or concept of the present invention as defined in the claims. Included in such variations are mixtures in which the encapsulated clomazone of this invention is part of a mixture with one or more other herbicides, e.g., flumeturon or sulfentrazone, whether or not encapsulated.

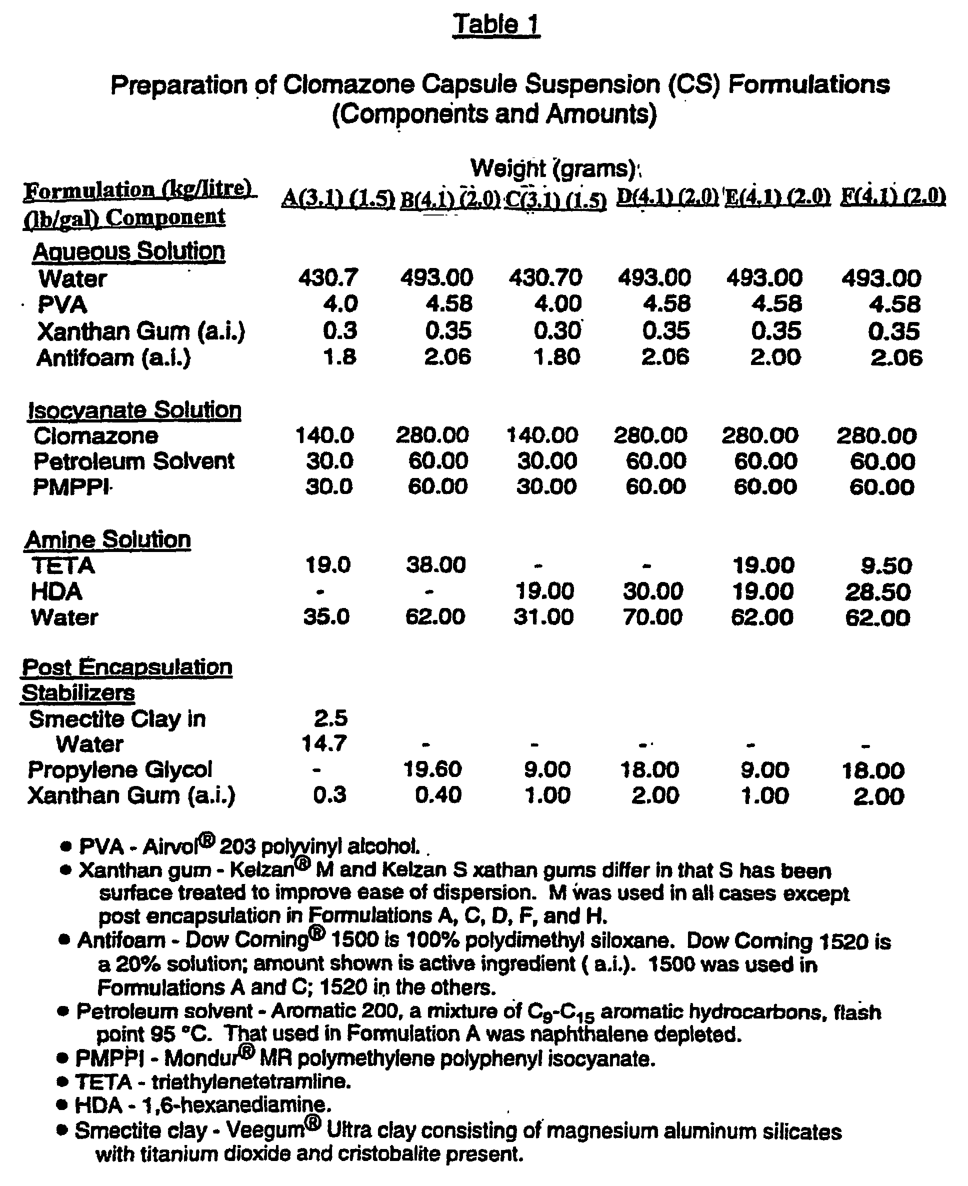

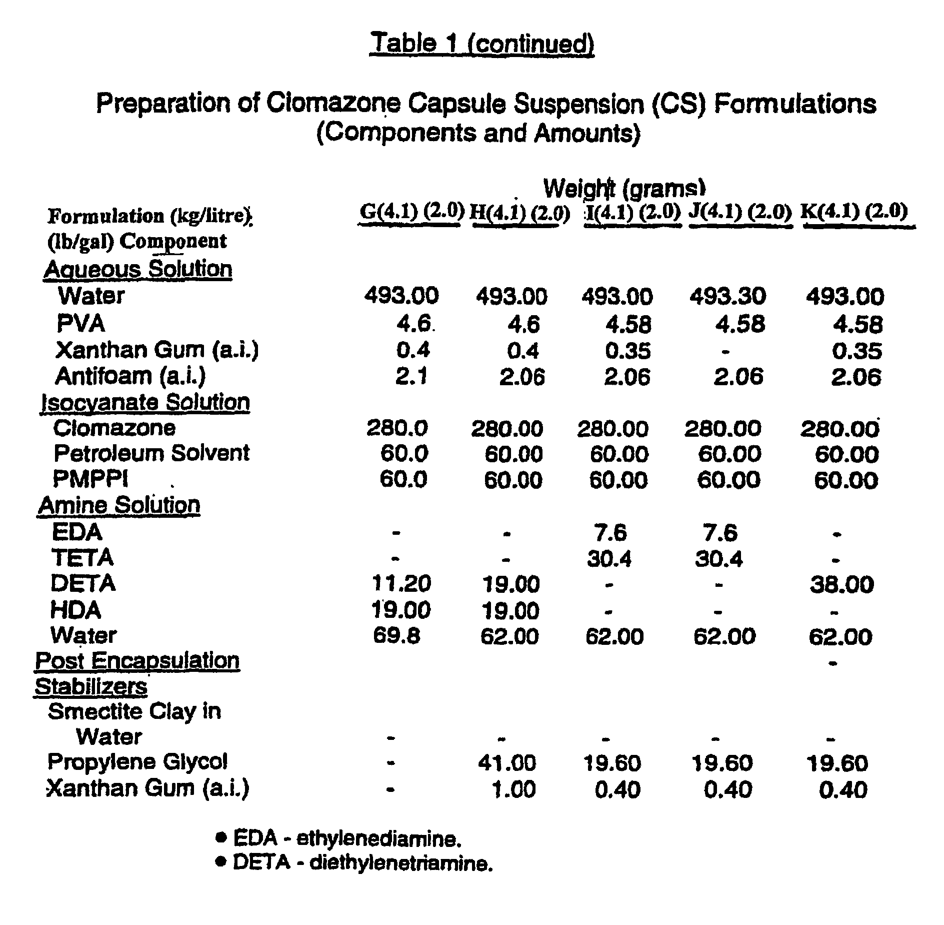

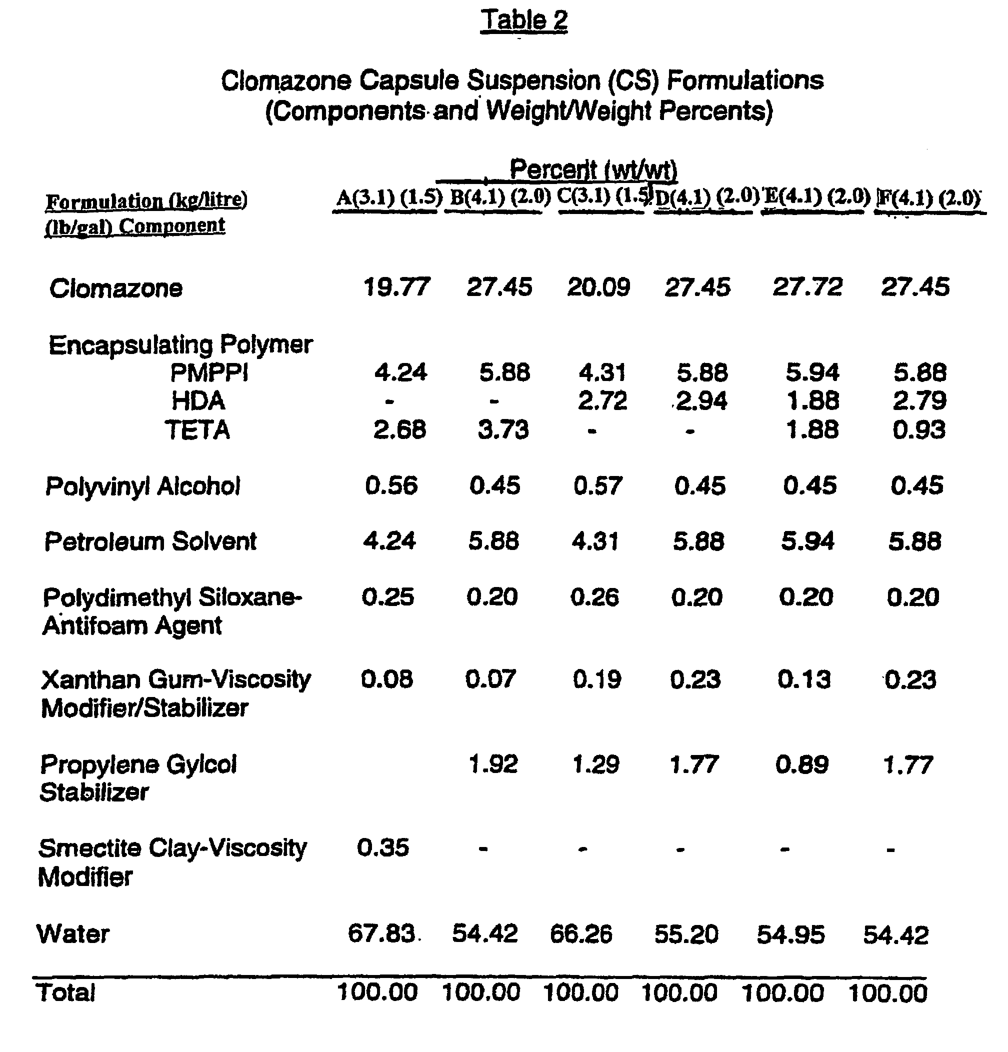

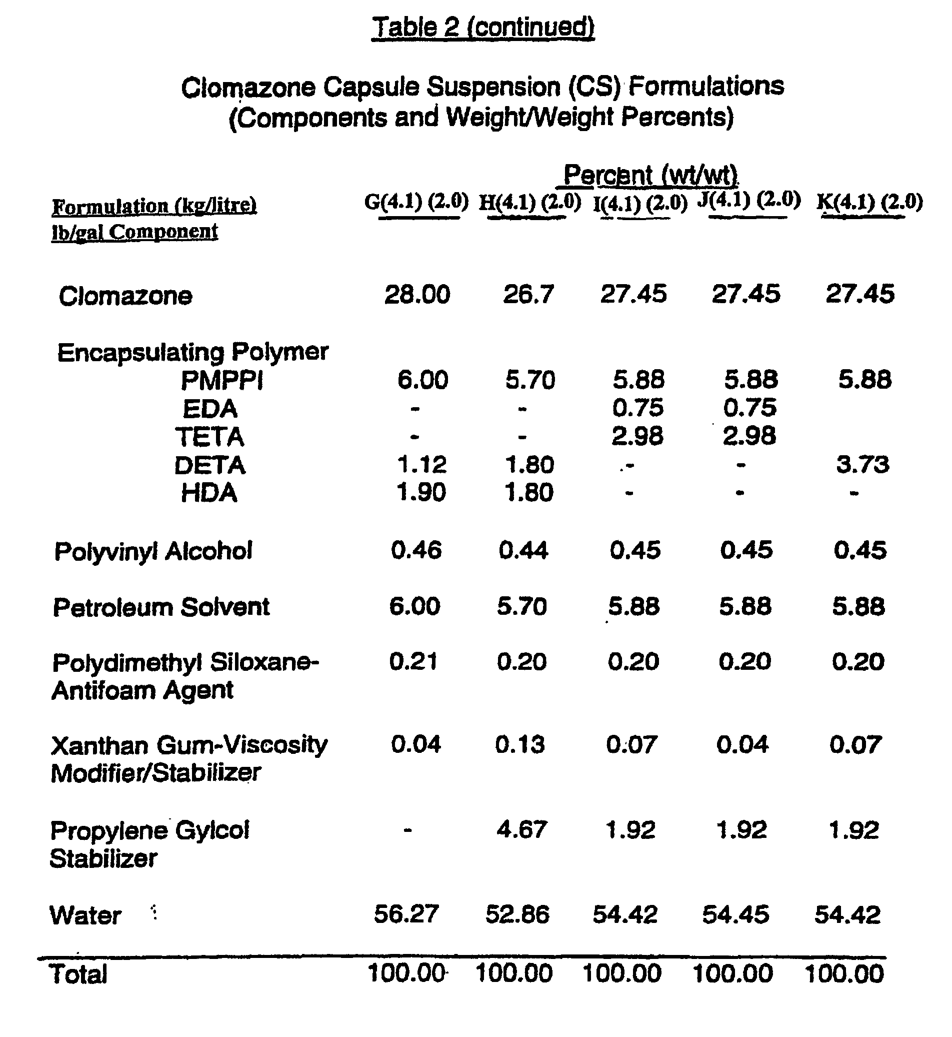

**Table 3**

| Large Scale Preparation of Clomazone CS Formulations (Components and Amounts) | | | |
|---|---|---|---|
| Weight in kg (lbs) | | | |
| Formulation (kg/litre) (lb/gal Component | A-1 (3.1) (1.5) | E-1 (4.1) (2,0) | P (6.2) (3.0) |
| Aqueous Solution | | | |
| Water | 101.08 (222.85) | 128.91 (284.20) | 124.47 (274.4) |
| PVA | 0.91 (2.0000 | 2.38 (5.24) | 2.29 (5.05) |
| Xanthan Gum | 0.14 (0.300) | 0.095 (0.21) | 0.100 (0.22) |
| Antifoam | 0.41 (0.900) | 1.08 (2.38) | 1.95 (4.30) |

| Isocyanate Solution | | | |
|---|---|---|---|
| Clomazone | 31.75 (70.000) | 73.18 (161.34) | 135.53 (289.8) |
| Petroleum Solvent | 6.80 (15.000) | 15.76 (34.75) | 14.15 (31.2) |
| PMPPI | 6.80 (15.000) | 15.76 (34.75) | 28.35 (62.5) |

| Amine Solution | | | |
|---|---|---|---|
| TETA | 40.94 (9.500) | 4.98 (10.97) | |
| HDA | - | 4.98(10.97) | |
| DETA | - | - | 18.14(40.0) |
| Water | 7.94 (17.500) | 18.37 (40.50) | |

| Post Encapsulation Additives | | | |
|---|---|---|---|
| Propylene Glycol | - | 16.19 (35.70) | 18.05 (39.8) |
| Xanthan Gum | - | 0.54 (1.19) | 11.88 (26.2*) |
| Smectite Clay | 0.57 (1.250) | - | - |
| Bactericide A¹ | 0.0041 (0.009) | - | - |
| Bactericide B² | 0.080 (0.177) | - | - |
| Bactericide C³ | - | - | 0.181 (0.4) |
| Na Naphthalene Sulfonate⁴ | - | - | 2.404 (5.3) |
| Concentrated Aqueous Hcl | - | - | 10.129 (22.33) |
| Amphoteric Surfactant⁵ | - | - | 11.794 (26.0) |

| | | | |
|---|---|---|---|
| ¹Dowcide® A (o-phenylphenate tetrahydrate) | | | |
| ²Legend® MK (mixture of 2-methyl-4-isothiazolin-3-ones) | | | |
| ³Proxel® (1,2-benzisothiazolin-3-one) | | | |
| ⁴Soldium salt of sulfonated naphthalene condensate | | | |
| ⁵Mirataine™ H2C-HA (sodium lauriminodipropionate) | | | |
| * as a 1.9 wt% dispersion. | | | |

**Table 4**

| Large Scale Clomazone CS Formulations (Components and Weight/Weight Percents) | | | |
|---|---|---|---|
| | Percent(wt/wt) | | |
| Formulation Component | A-1 | E-1 | P |
| Clomazone | 19.74 | 25.93 | 35.02 |
| Encapsulating Polymer | | | |
| PMPPI | 4.23 | 5.59 | 7.55 |
| HDA | - | 1.76 | - |
| TETA | 2.68 | 1.76 | - |
| DETA | - | - | 4.83 |
| Polyvinyl Alcohol | 0.56 | 0.84 | 0.61 |
| Petroleum Solvent | 4.23 | 5.59 | 3.77 |
| Polydimethyl Sitoxane-Antifoam Agent | 0.25 | 0.38 | 0.53 |
| Xanthan Gum-Viscosity | 0.09 | 0.23 | 0.09 |
| Modifier/Stabilizer | | | |
| Propylene Gylcol Stabilizer | - | 5.74 | 4.81 |
| Smectite Clay-Viscosity Modifier | 0.37 | - | - |
| Bactericides | 0.05 | - | 0.05 |
| Na Naphthalene Sulfonate Condensate | - | - | 0.65 |
| Concentrated Aqueous Hcl | - | - | 2.70 |
| Amphoteric Surfactant | - | - | 0.94 |
| Water | 67.80 | 52.18 | 38.45 |
| Total | 100.00 | 100.00 | 100.0 |

**Table 5**

| Unsatisfactory Clomazone CS Formulations (Components and Weight/Weight Percents) | | | | |
|---|---|---|---|---|
| | Percent (Wt/Wt) | | | |
| Formulation Component | L | M | N | O |
| Clomazone | 20.38 | 30.43 | 20.38 | 27.45 |

| Encapsulating Polymer | | | | |
|---|---|---|---|---|
| PMPPI | ---- | ---- | 4.37 | 5.88 |
| TDI | 4.37 | 1.73 | - | - |
| TETA | 2.77 | - | 2.77 | |
| DETA | - | 0.73 | - | 3.73 |
| EDA | - | 0.15 | - | - |
| Polyvinyl Alcohol | 0.58 | 2.72 | 0.58 | 0.45 |
| Petroleum Solvent | 4.37 | - | 4.37 | 5.88 |
| Polydimethyl Siloxane Antifoam Agent | 0.26 | 0.28 | 0.26 | 0.20 |
| Xanthan Gum Viscosity Modifier/Stabilizer | 0.04 | - | - | 0.04 |
| Propylene Glycol Stabilizer | - | - | - | 1.92 |
| Water | 37.23* | 63.96 | 67.27* | 54.45* |
| Total | 100.00 | 100.00 | 100.00 | 100.00 |
| TDI is toluene diisocyanate | | | | |
| DETA is diethylenetriamine | | | | |
| EDA is ethylenediamine | | | | |

| | | | | |
|---|---|---|---|---|
| *Ten mL of a 10% solution of xanthan gum in propylene glycol was added to stabilize the formulation after it was prepared. | | | | |

**Table 5a**

| Unsatisfactory Clomazone CS Formulations (Components and Weight/Weight Percents) | | | | |
|---|---|---|---|---|
| | Weight (g) | | Percent (Wt/Wt) | |
| Formulation Component | V | W | V | W |
| Clomazone | 300.0 | 300.0 | 34.9 | 49.0 |

| Encapsulating Polymer | | | | |
|---|---|---|---|---|
| PMPPI | 22.5 | 22.5 | 2.6 | 3.7 |
| HDA (40%) | 24.8 | 24.8 | 2.9 | 4.0 |
| Reax 88B® | 11.6 | 5.7 | 1.3 | 0.9 |
| Ethylene Glycol Stabilizer | 25.7 | 25.7 | 3.0 | 4.2 |
| Water | 476.0 | 234.0 | 55.3 | 38.2 |
| Total | 860.6 | 612.7 | 100.00 | 100.00 |
| HDA is 1,6-hexanediamine. | | | | |
| Reax 88B® is a sodium lignosulfonate. | | | | |

**Table 6**

| Average Particle Size of Microcapsules in Clomazone CS Formulations | | | |
|---|---|---|---|
| | Average Particle | | Average Particle |
| Formulation | Size (µm) | Formulation | Size (µm) |
| A | 26 | J | 11 |
| B | 21 | K | 17 |
| C | 16 | L | 14 |
| D | 18 | M | 2 |
| E | 15 | N | 9 |
| F | 15 | O | 7 |
| G | 23 | P | 14 |
| H | 12 | V | 21 |
| I | 12 | W | 17 |
| Particle size was determined using a Malvern Master Sizer MS 20. | | | |

**Table 7**

| Volatility of Clomazone from CS Formulations as Compared to the Volatility of Clomazone from the Standard, Command® 4 EC Herbicide | | |
|---|---|---|
| Formulation | Micrograms of Clomazone Collected | Percent of 4.0 EC |
| A | 28 | 32 |
| B | 30 | 33 |
| C | 17 | 19 |
| D | 20 | 22 |
| E | 8 | 8 |
| F | 9 | 10 |
| G | 15 | 14 |
| H | 13 | 14 |
| I | 21 | 15 |
| J | 23 | 17 |
| K | 24 | 17 |
| L | 81 | 91 |
| M | * | 110 |
| N | 56 | 62 |
| O | 22 | 16 |
| P | 14 | 14 |
| V | 110 | 103 |
| W | 126 | 114 |
| Standard 4.0 EC | 90-93 | 100 |

| | | |
|---|---|---|
| *Volatility determined by a different test method. | | |

**Table 8**

| Volatility Effect of Clomazone CS FormulationsCompared to Command® 4 EC Herbicide on Sunflowers in Field Studies | | |
|---|---|---|
| Formulation (Test No.) | Area of Discolored Sunflowers (cm²) | Percent Reduction in Area Discolored by Volatility |
| A-1 (1) | 6578 | 49.0 |
| Command 4 EC | 12904 | |
| A-1 (2) | 17449 | 52.8 |
| Command 4 EC | 37004 | |
| P | 256334 | 67.5 |
| Command 4 EC | 788721 | |

**Table 9**

| Relative Potency of Clomazone CS Formulations Compared to Command® 4.EC Herbicide against Weed Species in Greenhouse Studies | | | | | | |
|---|---|---|---|---|---|---|
| | Relative Potency | | | | | |
| Formulation | Barnyard-grass | Giant Foxtail | Yellow Foxtail | Shatter-cane | Green Foxtail | Velvet-leaf |
| A | 0.70 | 0.54 | 0.35 | 0.66 | --- | 0.69 |
| D | 0.50 | 0.59 | 1.02 | 0.40 | --- | 0.36 |
| E | 0.19 | 0.28 | * | * | --- | 0.34 |
| P | 0.63 | 0.54 | --- | 0.95 | 0.95 | 0.90 |

| | | | | | | |
|---|---|---|---|---|---|---|
| * Too small to measure at rate tested. | | | | | | |

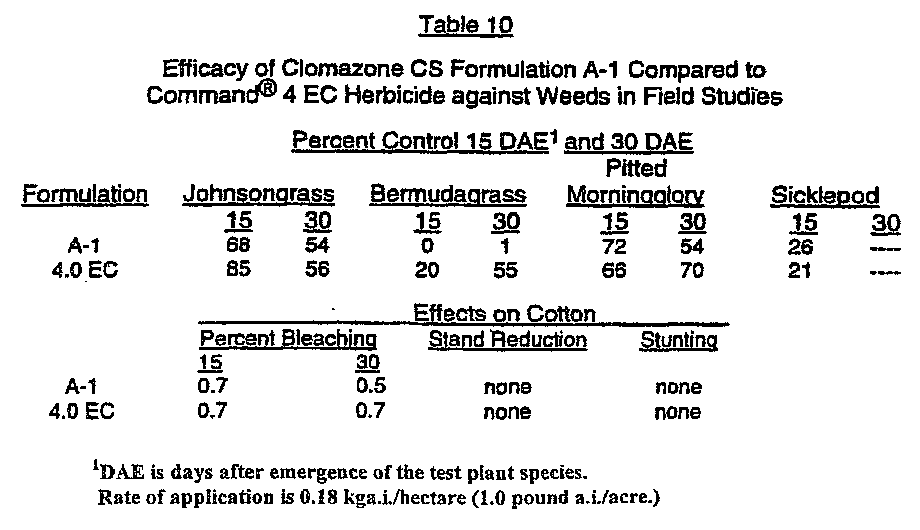

**Table 11**

| Efficacy of Clomazone CS Formulation E Compared to Command® 4 EC Herbicide against Certain Weed Species in Field Studies | | | | | | |
|---|---|---|---|---|---|---|
| | Percent Control | | | | | |
| Plant Species | Rate of Application is g a.i. (lb.ai/A)¹ | | | | | |
| | 92 (0.5) | | 46 (0.25) | | 23 (0.125) | |
| Formulation | E | 4 EC | E | 4 EC | E | 4 EC |
| Bamyardgrass | 100 | 100 | 98 | 99 | 91 | 97 |
| Giant Foxtail | 100 | 100 | 98 | 98 | 95 | 96 |
| Yellow Foxtail | 95 | 93 | 50 | 57 | 50 | 35 |
| Green Foxtail | 99 | 100 | 83 | 95 | 53 | 68 |
| Shattercane | 73 | 90 | 33 | 53 | 33 | 35 |
| Johnsongrass | 100 | 100 | 93 | 97 | 85 | 93 |
| Spring Wheat | 55 | 60 | 18 | 26 | 8 | 9 |
| Velvetleaf | 100 | 100 | 93 | 96 | 85 | 93 |
| Grass | | | | | | |
| Average² | 95 | 97 | 77 | 83 | 68 | 71 |

| | | | | | | |
|---|---|---|---|---|---|---|
| ¹Formulations applied to the plots preemergence. | | | | | | |
| ²Velvetleaf and Spring Wheat are not included in the grass average. Percent control ratings were determined 20 days after treatment. | | | | | | |

**Table 12**

| Efficacy of Clomazone CS Formulation P Compared to Command® 4 EC Herbicide against Weeds in Field Studies | | | | | | |
|---|---|---|---|---|---|---|
| | Percent Control | | | | | |
| Plant Species | 15 DAT | | 30 DAT | | 60 DAT | |
| Formulation | P | 4 EC | P | 4 EC | P | 4 EC |
| Velvetleaf | 95.0 | 95.0 | 97.5 | 97.55 | --- | --- |
| Prickly Sida | 89.3 | 90.5 | 83.6 | 90.7 | 77.3 | 88.5 |
| Spotted Spurge | --- | --- | 95.0 | 98.0 | --- | --- |
| Cocklebur | 58.8 | 72.5 | 58.8 | 59.4 | 87.5 | 93.5 |
| Broadleaf Signalgrass | 100.0 | 100.0 | 100.0 | 100.0 | 95.0 | 95.0 |
| Seedling Johnsongrass | --- | --- | 96.0 | 97.0 | --- | --- |
| Large Crabgrass | --- | --- | 95.5 | 99.0 | 100.0 | 100.0 |
| Pitted Morningglory | 93.0 | 95.2 | 82.9 | 89.5 | 78.4 | 88.5 |
| Ivyleaf . Morningglory | 92.1 | 95.0 | 88.0 | 91.0 | 57.0 | 77.0 |
| Entire Momingglory | 73.9 | 70.9 | 73.9 | 71.6 | 66.9 | 73.0 |
| Momingglory Spp. | --- | --- | 95.7 | 99.3 | 99.0 | 99.0 |
| | | | | | | |

| | Effects on Cotton (Percent) | | | | | |
|---|---|---|---|---|---|---|
| | 15 DAT | | 30 DAT | | 60 DAT | |
| Formulation | P | 4 EC | P | 4 EC | P | 4 EC |
| Stand Reduction | 0 | 0 | 0 | 0 | 0 | 0 |
| Stunting | 0.5 | 0.2 | 1.1 | 3.0 | 0 | 0 |
| Discoloration | 1.8 | 5.9 | 1.7 | 4.9 | 0 | 0.2 |
| DAT is days after treatment. | | | | | | |
| Rate of application for both formulations is 0.162 kg a.i./hectare (0.88 pound a.i./acre). | | | | | | |

**Table 13**

| Efficacy of Clomazone CS Formulation P Compared to Command® 4 EC Herbicide against Certain Weeds in Field Studies | | | | | | | | |
|---|---|---|---|---|---|---|---|---|
| | Percent Control | | | | | | | |
| | Rate of application is g/hectare (lb/A) | | | | | | | |
| Plant Species | 46 (0.25) | | 92 (0.50) | | 138 (0.75 | | 184 (1.00) | |
| Formulation | P | 4 EC | P | 4 EC | P | 4 EC | P | 4 EC |
| Redroot Pigweed | 73.8 | 88.8 | 92.3 | 97.5 | 100.0 | 100.0 | 100.0 | 100.0 |
| Velvetleaf | 85.0 | 88.8 | 91.0 | 98.3 | 97.0 | 99.8 | 98.8 | 100.0 |
| Common | 92.3 | 95.0 | 97.3 | 100.0 | 100.0 | 100.0 | 99.8 | 100.0 |
| Barnyardgrass | | | | | | | | |
| Giant Foxtail | 92.5 | 96.3 | 98.0 | 100.0 | 100.0 | 100.0 | 100.0 | 100.0 |
| Shattercane | 65.0 | 73.8 | 76.3 | 96.0 | 91.3 | 97.3 | 94.5 | 100.0 |
| ¹Formulations applied to plots preemergence. Percent control ratings were determined 18 days after treatment. | | | | | | | | |

## Claims

1. A process for the preparation of herbicidally effective formulations of clomazone having a volatility less than fifty percent of the volatility of an emulsifiable concentrate of clomazone containing four pounds of clomazone per gallon of formulation which comprises microencapsulating the clomazone by interfacial polymerization by the steps of:
a) providing an aqueous phase containing 0.3 to 3.0 wt% of one or more emulsifiers;
b) providing a water immiscible phase consisting of clomazone, polymethylene polyphenyl isocyanate (PMPPI), and a hydrocarbon solvent; the weight ratio of clomazone to PMPPI being in the range of 1:1 to 6:1;
c) emulsifying the water immiscible phase in the aqueous phase, forming a dispersion of water immiscible droplets throughout the aqueous phase;
d) agitating the dispersion while adding thereto an aqueous solution of 10 to 100 weight percent of at least one polyfunctional amine selected from ethylenediamine (EDA), diethyltriamine (DETA), triethylenetetramine (TETA), and 1,6-hexanediamine (HDA), with the proviso that (EDA) is used only in a mixture, the weight ratio of polyfunctional amine to PMPPI being in the range of 0.1:1 to 1:1, thus forming microcapsules having a polyurea shell wall around the water immiscible droplets; and
e) curing the microcapsules by continuing the agitation while heating the dispersion at a temperature in the range of 35° to 60°C for a period of 3 to 10 hours to produce a formulation in which the average size of the microcapsules is in the range of 5 to 50 microns.

2. A process as claimed in claim 1, in which the emulsifier is a polyvinyl alcohol; the antifoam agent is a polydimethyl siloxane; the ratio of clomazone to PMPPI is 4.5:1 to 4.8:1; the polyamine is a mixture of TETA and HDA in which the ratio of TETA to HDA is 3:1 to 1:3; the microcapsules are cured at 45° to 50°C for 4 to 5 hours and have an average size of 5 to 30 microns.

3. A process as claimed in claim 1 in which the emulsifier is a polyvinyl alcohol; the antifoam agent is a polydimethyl siloxane; the ratio of clomazone to PMPPI is 4.5:1 to 4.7:1; the polyamine is a mixture of DETA and HDA in which the ratio of DETA to HDA is 3:1 to 1:3; the microcapsules are cured at 45 ° to 50°C for 4 to 5 hours and have an average size of 5 to 30 microns.

4. A process as claimed in claim 1 in which the emulsifiers comprise a polyvinyl alcohol; the antifoam agent is a polydimethyl siloxane; the ratio of clomazone to PMPPI is 4.5:1 to 4.8:1; the polyamine is DETA, the microcapsules are cured at 45° to 50°C for 4 to 5 hours and have an average size of 5 to 30 microns.

5. A process as claimed in claim 4, in which the emulsifiers comprise a polyvinyl alcohol and a sodium salt of sulfonated naphthalene condensate.

6. A process as claimed in any one of the preceding claims, in which there is added to the formulation after completion of the curing step one or more stabilizers selected from 0.05 to 0.30 wt% xanthan gum, 0.75 to 6.5 wt% propylene glycol, 0.5 to 6.0 wt% one or more surfactants, and 0.25 to 0.50 wt% smectite clay, to adjust the viscosity to 1700 to 3800 cps and the suspensibility to greater than 70%, each weight percent relative to the weight of the formulation after addition of the stabilizers.

7. A process as claimed in claim 6 in which the amounts of stabilizers added are 0.05 to 0.3wt% xanthan gum and 0.75 to 6.5 wt% propylene glycol.

8. A process as claimed in any one of the preceding claims further comprising:
f) adjusting the pH of the cured microcapsule dispersion to between 6.5 and 9.0.

9. A process as claimed in any one of the preceding claims wherein the aqueous phase of step a) comprises 0.02 to 0.20 wt% of a xanthan gum viscosity modifier/stabilizer.

10. A process as claimed in claim 8, wherein the aqueous phase of step a) further comprises 0.1 to 1.0 wt% of an antifoam agent.

11. A process for the preparation of herbicidally effective formulations of clomazone having a volatility less than fifty percent of the volatility of an emulsifiable concentrate of clomazone containing four pounds of clomazone per gallon of formulation which comprises microencapsulating the clomazone by interfacial polymerization by the steps of:
a) providing an aqueous phase containing 0.5 to 3.0 wt% of one or more emulsifiers;
b) providing a water immiscible phase consisting of clomazone, polymethylene polyphenyl isocyanate (PMPPI), and a hydrocarbon solvent; the weight ratio of clomazone to PMPPI being in the range of 1:1 to 6:1;
c) emulsifying the water immiscible phase in the aqueous phase, forming a dispersion of water immiscible droplets throughout the aqueous phase;
d) agitating the dispersion while adding thereto at least one polyfunctional amine selected from diethyltriamine (DETA), triethylenetetramine (TETA) and 1,6-hexanediamine (HDA), the weight ratio of polyfunctional amine to PMPPI being in the range of 0.1:1 to 1:1, thus forming microcapsules having a polyurea shell wall around the water immiscible droplets; and
e) curing the microcapsules by continuing the agitation while heating the dispersion at a temperature in the range of 35 ° to 60°C for a period of 3 to 10 hours.

12. A process as claimed in claim 11, further comprising:
f) adjusting the pH of the cured microcapsule dispersion to between 6.5 and 9.0.

13. A process as claimed in claim 11 or 12, wherein the aqueous phase of step a) comprises 0.05 to 0.20 wt% of a xanthan gum viscosity modifier/stabilizer, and 0.1 to 1.0 wt% of an antifoam agent.

14. A process for the preparation of an herbicidally effective clomazone composition comprising:
microencapsulating clomazone by interfacial polymerization to form plural cured microcapsules comprising a polyurea shell wall surrounding encapsulated material comprising clomazone,
wherein said herbicidally effective clomazone composition has a clomazone volatility less than fifty perecent of the volatility of an emulsifiable concentrate of clomazone, wherein said microencapsulating comprises:
forming a dispersion of plural uncured microcapsules, each comprising a polyurea shell wall surrounding an encapsulated material comprising clomazone, by emulsifying an aqueous phase comprising water and an emulsifier and a water immiscible phase comprising polymethylene polyphenyl isocyanate (PMPPI) and clomazone and adding at least one polyfunctional amine selected from the group consisting of ethylenediamine (EDA), diethyltriamine (DETA), triethylenetetramine (TETA), and 1,6-hexanediamine (HDA), with the proviso that EDA is used only in the presence of a second polyfunctional amine.

15. A process as claimed in claim 14, wherein said microencapsulating comprises:
(1) curing said plural uncured microcapsules comprising a polyurea shell wall surrounding an encapsulated material comprising clomazone to form plural cured microcapsules.

16. A process as claimed in claim 15, wherein said plural uncured microcapsules are cured by heating said microcapsules at a temperature of 35 to 60°C for 3 to 10 hours.

17. A process as claimed in any one of claims 14 to 16, wherein said aqueous phase further comprises an antifoam agent and a viscosity modifier/stabilizer.

18. A process as claimed in any one of claims 14 to 17, wherein said water immiscible phase further comprises a solvent and said encapsulated material further comprises a hydrocarbon solvent.

19. A process as claimed in any one of claims 14 to 18, further comprising the step of:
(b) adjusting the pH of the composition to between about 6.5 to about 9.0; wherein step (b) is conducted after step (a).

20. An herbicidal formulation prepared according to any one of the preceding claims.

21. An herbicidal formulation containing from 1 to 4 pounds of clomazone per gallon of formulation and having a volatility less than fifty percent of the volatility of an emulsifiable concentrate of clomazone containing four pounds of clomazone per gallon of formulation, comprising:
(a) an aqueous suspension of microcapsules made up of a polyurea shell surrounding a core of clomazone and a minor amount of a hydrocarbon solvent, the polyurea having been formed from the interfacial reaction of polymethylene polyphenyl isocyanate (PMPPI) with ethylenediamine (EDA), diethylenetriamine (DETA), triethylenetetramine (TETA), or 1,6-hexanediamine (HDA), or a mixture of the polyfunctional amines, with the proviso that EDA is used only in a mixture.;
b) 0.2 to 1.00 wt% polyvinyl alcohol;
c) 0.1 to 0.5 wt% antifoam agent; and
d) 0.75 to 7.0 wt% propylene glycol, the average size of the microcapsules being in the range of 5 to 50 microns and having a suspensibility of greater than 70%, a viscosity of 1700 to 3800 cps, and a 100 mesh wet screen analysis of greater than 99.95%.

22. A formulation as claimed in claim 21, containing two pounds of clomazone per gallon of formulation, in which the weight ratio of clomazone to PMPPI is 4.5:1 to 4.8:1 and the polyfunctional amines are TETA and HDA, with the weight ratio of TETA to HDA 3:1 to 1:3.

23. A formulation as claimed in claim 21, containing two pounds of clomazone per gallon of formulation, in which the weight ratio of clomazone to PMPPI is 4.5:1 to 4.8:1 and the polyfunctional amines are TETA and DETA, with the weight ratio of TETA to DETA 3:1 to 1:3.

24. A formulation as claimed in claim 21, containing two pounds of clomazone per gallon of formulation, in which the weight ratio of clomazone to PMPPI is 4.5:1 to 4.8:1 and the polyfunctional amines are DETA and HDA, with the weight ratio of DETA to HDA 3:1 to 1:3.

25. A formulation as claimed in claim 21, containing three pounds of clomazone per gallon of formulation, in which the weight ratio of clomazone to PMPPI is 4.5:1 to 4.8:1 and the polyfunctional amine is DETA.

26. A formulation as claimed in any one of claims 20 to 25, in which the pH is adjusted to between 6.5 and 9.0.

27. A herbicidal formulation as claimed in any one of claims 21 to 26, further comprising:
e) 0.07 to 0.30 wt% xanthan gum viscosity modifier/stabilizer.

28. A herbicidal composition of microencapsulated clomazone comprising:
a polyurea shell forming microcapsules; and encapsulated material within said shell, said encapsulated material comprising an herbicidally effective amount of clomazone; wherein said composition has a clomazone volatility less than fifty percent of the volatility of an emulsifiable concentrate of clomazone, said polyurea shell being formed by an interfacial polymerization of polymethylene polyphenyl isocyanate and one or more polyfunctional amines selected from the group consisting of ethylenediamine (EDA), diethyltriamine (DETA), triethylenetetramine (TETA), and 1,6-hexanediamine (HDA), with the proviso that (EDA) is used only in the presence of a second polyfunctional amine.

29. A herbicidal composition as claimed in claim 28, wherein said polymethylene polyphenyl isocyanate and said polyfunctional amine are polymerized by emulsifying an aqueous phase comprising water and an emulsifier and a water immiscible phase comprising an isocyanate and clomazone, and adding at least one said polyfunctional amine to form said microcapsules.

30. A herbicidal composition as claimed in any one of claims 28 or 29, wherein said encapsulated material further comprises a hydrocarbon solvent.

## Patentansprüche

1. Ein Verfahren zur Zubereitung von herbizid wirksamen Formulierungen von Clomazon mit einer Flüchtigkeit von weniger als fünfzig Prozent der Flüchtigkeit eines emulgierbaren Clomazonkonzentrats, das vier Pfund Clomazon pro Gallone Formulierung enthält, das aus dem Mikroverkapseln des Clomazons durch Grenzflächenpolymerisation durch folgende Schritte besteht:
a) Bereitstellen einer wässrigen Phase, die 0,3 bis 3,0 Gew.-% eines oder mehrerer Emulgatoren enthält;
b) Bereitstellen einer nicht mit Wasser mischbaren Phase, die aus Clomazon, Polymethylenpolyphenylisocyanat (PMPPI) und einem Kohlenwasserstofflösungsmittel besteht; wobei das Gewichtsverhältnis von Clomazon zu PMPPI im Bereich von 1:1 bis 6:1 liegt;
c) Emulgieren der nicht mit Wasser mischbaren Phase in der wässrigen Phase, wodurch eine Dispersion von nicht mit Wasser mischbaren Tröpfchen durch die wässrige Phase hindurch geformt wird;
d) Umrühren der Dispersion während des Hinzufügens einer wässrigen Lösung von 10 bis 100 Gewichtsprozent von mindestens einem polyfunktionellen Amin, ausgewählt aus Ethylendiamin (EDA), Diethyltriamin (DETA), Triethylentetramin (TETA) und 1,6-Hexandiamin (HDA), unter der Voraussetzung, dass (EDA) lediglich in einer Mischung verwendet wird, wobei das Gewichtsverhältnis des polyfunktionellen Amins zu PMPPI im Bereich von 0,1:1 bis 1:1 liegt und somit Mikrokapseln mit einer Polyurea-Kapselwand um die nicht mit Wasser mischbaren Tröpfchen formt; und
e) Vernetzen der Mikrokapseln durch stetiges Umrühren, während die Dispersion bei einer Temperatur im Bereich von 35 ° bis 60 °C über einen Zeitraum von 3 bis 10 Stunden erhitzt wird, um eine Formulierung herzustellen, bei der die durchschnittliche Größe der Mikrokapseln im Bereich von 5 bis 50 Mikronen liegt.

2. Verfahren gemäß Anspruch 1, bei dem der Emulgator ein Polyvinylalkohol ist; das Antischaummittel ein Polydimethylsiloxan ist; das Verhältnis von Clomazon zu PMPPI 4,5:1 bis 4,8:1 beträgt; das Polyamin eine Mischung aus TETA und HDA ist, bei der das Verhältnis von TETA zu HDA 3:1 bis 1:3 beträgt; die Mikrokapseln bei 45 ° bis 50 °C für 4 bis 5 Stunden vernetzt werden und eine durchschnittliche Größe von 5 bis 30 Mikronen aufweisen.

3. Verfahren gemäß Anspruch 1, bei dem der Emulgator ein Polyvinylalkohol ist; das Antischaummittel ein Polydimethylsiloxan ist; das Verhältnis von Clomazon zu PMPPI 4,5:1 bis 4,7:1 beträgt; das Polyamin eine Mischung aus DETA und HDA ist, bei der das Verhältnis von DETA zu HDA 3:1 bis 1:3 beträgt; die Mikrokapseln bei 45 ° bis 50 °C für 4 bis 5 Stunden vernetzt werden und eine durchschnittliche Größe von 5 bis 30 Mikronen aufweisen.

4. Verfahren gemäß Anspruch 1, bei dem die Emulgatoren aus einem Polyvinylalkohol bestehen; das Antischaummittel ein Polydimethylsiloxan ist; das Verhältnis von Clomazon zu PMPPI 4,5:1 bis 4,8:1 beträgt; das Polyamin DETA ist, die Mikrokapseln bei 45 ° bis 50 °C für 4 bis 5 Stunden vernetzt werden und eine durchschnittliche Größe von 5 bis 30 Mikronen aufweisen.

5. Verfahren gemäß Anspruch 4, bei dem die Emulgatoren aus einem Polyvinylalkohol und einem Natriumsalz aus sulfoniertem Naphthalenkondensat bestehen.

6. Verfahren gemäß einem der vorhergehenden Ansprüche, bei dem der Formulierung, nach Beenden des Vernetzungsschritts, ein oder mehrere Stabilisatoren, ausgewählt aus 0,05 bis 0,30 Gew.-% Xanthan, 0,75 bis 6,5 Gew.-% Propylenglykol, 0,5 bis 6,0 Gew.-% eines oder mehrerer Tenside und 0,25 bis 0,50 Gew.-% smektischer Ton hinzugefügt wurden, um die Viskosität auf 1700 bis 3800 cps und die Suspendierbarkeit auf mehr als 70 % einzustellen, wobei sich die Gewichtsprozente jeweils auf das Gewicht der Formulierung nach dem Hinzufügen der Stabilisatoren beziehen.

7. Verfahren gemäß Anspruch 6, bei dem die Mengen an hinzugefügten Stabilisatoren 0,05 bis 0,3 Gew.-% Xanthan und 0,75 bis 6,5 Gew.-% Propylenglykol betragen.

8. Verfahren gemäß einem der vorhergehenden Ansprüche, ferner bestehend aus:
f) dem Einstellen des pH-Werts der vernetzten Mikrokapseldispersion auf zwischen 6,5 und 9,0.

9. Verfahren gemäß einem der vorhergehenden Ansprüche, wobei die wässrige Phase aus Schritt a) aus 0,02 bis 0,20 Gew.-% eines Viskositätsmodifikators/-stabilisators aus Xanthan besteht.

10. Verfahren gemäß Anspruch 8, wobei die wässrige Phase aus Schritt
a) ferner aus 0,1 bis 1,0 Gew.-% eines Antischaummittels besteht.

11. Verfahren zur Zubereitung von herbizid wirksamen Formulierungen von Clomazon mit einer Flüchtigkeit von weniger als fünfzig Prozent der Flüchtigkeit eines emulgierbaren Clomazonkonzentrats, das vier Pfund Clomazon pro Gallone Formulierung enthält, bestehend aus dem Mikroverkapseln des Clomazons durch Grenzflächenpolymerisation durch folgende Schritte:
a) Bereitstellen einer wässrigen Phase, die 0,5 bis 3,0 Gew.-% eines oder mehrerer Emulgatoren enthält;
b) Bereitstellen einer nicht mit Wasser mischbaren Phase, die aus Clomazon, Polymethylenpolyphenylisocyanat (PMPPI) und einem Kohlenwasserstofflösungsmittel besteht; wobei das Gewichtsverhältnis von Clomazon zu PMPPI im Bereich von 1:1 bis 6:1 liegt;
c) Emulgieren der nicht mit Wasser mischbaren Phase in der wässrigen Phase, wodurch eine Dispersion von nicht mit Wasser mischbaren Tröpfchen durch die wässrige Phase hindurch geformt wird;
d) Umrühren der Dispersion während des Hinzufügens von mindestens einem polyfunktionellen Amin, ausgewählt aus Diethyltriamin (DETA), Triethylentetramin (TETA) und 1,6-Hexandiamin (HDA), wobei das Gewichtsverhältnis des polyfunktionellen Amins zu PMPPI im Bereich von 0,1:1 bis 1:1 liegt und somit Mikrokapseln mit einer Polyurea-Kapselwand um die nicht mit Wasser mischbaren Tröpfchen formt; und
e) Vernetzen der Mikrokapseln durch stetiges Umrühren, während die Dispersion bei einer Temperatur im Bereich von 35 ° bis 60 °C über einen Zeitraum von 3 bis 10 Stunden erhitzt wird;

12. Verfahren gemäß Anspruch 11, ferner bestehend aus:
f) dem Einstellen des pH-Werts der vernetzten Mikrokapseldispersion auf zwischen 6,5 und 9,0.

13. Verfahren gemäß Anspruch 11 oder 12, wobei die wässrige Phase aus Schritt a) aus 0,05 bis 0,20 Gew.-% eines Viskositätsmodifikators/-stabilisators aus Xanthan und 0,1 bis 1,0 Gew.-% eines Antischaummittels besteht.

14. Verfahren zur Zubereitung einer herbizid wirksamen Clomazonzusammensetzung, bestehend aus:
dem Mikroverkapseln von Clomazon durch Grenzflächenpolymerisation zum Formen von mehreren vernetzten Mikrokapseln, die aus einer Polyurea-Kapselwand bestehen, die das aus Clomazon bestehende, verkapselte Material umgibt,
wobei die herbizid wirksame Clomazonmischung eine Clomazonflüchtigkeit von weniger als fünfzig Prozent der Flüchtigkeit eines emulgierbaren Clomazonkonzentrats aufweist,
wobei das Mikroverkapseln aus Folgendem besteht:
dem Formen einer Dispersion aus mehreren unvernetzten Mikrokapseln, wobei jede aus einer Polyurea-Kapselwand besteht, die das aus Clomazon bestehende, verkapselte Material umgibt, durch das Emulgieren einer wässrigen Phase, bestehend aus Wasser und einem Emulgator, und einer nicht mit Wasser mischbaren Phase, bestehend aus
Polymethylenpolyphenylisocyanat (PMPPI) und Clomazon, und dem Hinzufügen von mindestens einem polyfunktionellen Amin, das aus der Gruppe, die aus Ethylendiamin (EDA), Diethyltriamin (DETA), Triethylentetramin (TETA) und 1,6-Hexandiamin (HDA) besteht, ausgewählt wird, unter der Voraussetzung, dass EDA lediglich in Anwesenheit eines zweiten polyfunktionellen Amins verwendet wird.

15. Verfahren gemäß Anspruch 14, wobei das Mikroverkapseln aus Folgendem besteht:
(1) dem Vernetzen der mehreren unvernetzten Mikrokapseln, die aus einer Polyurea-Kapselwand bestehen, die ein aus Clomazon bestehendes, verkapseltes Material zum Formen mehrerer vernetzter Mikrokapseln umgeben.

16. Verfahren gemäß Anspruch 15, wobei die mehreren unvernetzten Mikrokapseln durch Erhitzen der Mikrokapseln bei einer Temperatur von 35 bis 60 °C für 3 bis 10 Stunden vernetzt werden.

17. Verfahren gemäß einem der Ansprüche 14 bis 16, wobei die wässrige Phase ferner aus einem Antischaummittel und einem Viskositätsmodifikator/-stabilisator besteht.

18. Verfahren gemäß einem der Ansprüche 14 bis 17, wobei die nicht mit Wasser mischbare Phase ferner aus einem Lösungsmittel besteht und das verkapselte Material ferner aus einem Kohlenwasserstofflösungsmittel besteht.

19. Verfahren gemäß einem der Ansprüche 14 bis 18, ferner bestehend aus folgendem Schritt:
(b) Einstellen des pH-Werts der Zusammensetzung auf zwischen ungefähr 6,5 bis ungefähr 9,0; wobei Schritt (b) nach Schritt (a) ausgeführt wird.

20. Eine herbizide Formulierung, die gemäß einem der vorhergehenden Ansprüche zubereitet wird.

21. Herbizide Formulierung, die 1 bis 4 Pfund Clomazon pro Gallone Formulierung enthält und eine Flüchtigkeit von weniger als fünfzig Prozent der Flüchtigkeit eines emulgierbaren Clomazonkonzentrats, das vier Pfund Clomazon pro Gallone Formulierung enthält, aufweist, bestehend aus:
(a) einer wässrigen Suspension von Mikrokapseln, die aus einer Polyurea-Kapselwand erstellt wurden, die einen Clomazonkern und eine geringe Menge an einem Kohlenwasserstofflösungsmittel umgibt, wobei das Polyurea aus der Grenzflächenreaktion von Polymethylenpolyphenylisocyanat (PMPPI) mit Ethylendiamin (EDA), Diethylentriamin (DETA), Triethylentetramin (TETA) oder 1,6-Hexandiamin (HDA), oder einer Mischung aus den polyfunktionellen Aminen geformt wurde, unter der Voraussetzung, dass EDA lediglich in einer Mischung verwendet wird;
(b) 0,2 bis 1,00 Gew.-% Polyvinylalkohol;
(c) 0,1 bis 0,5 Gew.-% Antischaummittel; und
(d) 0,75 bis 7,0 Gew.-% Propylenglykol, wobei die durchschnittliche Größe der Mikrokapseln im Bereich von 5 bis 50 Mikronen liegt und mit einer Suspendierbarkeit, die größer als 70 % ist, einer Viskosität von 1700 bis 3800 cps, und einer 100 Maschen-Nasssiebanalyse von mehr als 99,95 %.

22. Formulierung gemäß Anspruch 21, die zwei Pfund Clomazon pro Gallone Formulierung enthält, bei der das Gewichtsverhältnis von Clomazon zu PMPPI 4,5:1 zu 4,8:1 ist und die polyfunktionellen Amine TETA und HDA sind, wobei das Gewichtsverhältnis von TETA zu HDA 3:1 zu 1:3 beträgt.

23. Formulierung gemäß Anspruch 21, die zwei Pfund Clomazon pro Gallone Formulierung enthält, bei der das Gewichtsverhältnis von Clomazon zu PMPPI 4,5:1 zu 4,8:1 ist und die polyfunktionellen Amine TETA und DETA sind, wobei das Gewichtsverhältnis von TETA zu DETA 3:1 zu 1:3 beträgt.

24. Formulierung gemäß Anspruch 21, die zwei Pfund Clomazon pro Gallone Formulierung enthält, bei der das Gewichtsverhältnis von Clomazon zu PMPPI 4,5:1 zu 4,8:1 ist und die polyfunktionellen Amine DETA und HDA sind, wobei das Gewichtsverhältnis von DETA zu HDA 3:1 bis 1:3 beträgt.

25. Formulierung gemäß Anspruch 21, die drei Pfund Clomazon pro Gallone Formulierung enthält, bei der das Gewichtsverhältnis von Clomazon zu PMPPI 4,5:1 zu 4,8:1 beträgt und das polyfunktionelle Amin DETA ist.

26. Formulierung gemäß einem der Ansprüche 20 bis 25, bei der der pH-Wert auf zwischen 6,5 und 9,0 eingestellt wird.

27. Herbizide Formulierung gemäß einem der Ansprüche 21 bis 26, ferner bestehend aus:
e) 0,07 bis 0,30 Gew.-% Viskositätsmodifizierer/-stabilisator aus Xanthan.

28. Eine herbizide Zusammensetzung aus mikroverkapseltem Clomazon, bestehend aus: einer Polyurea-Kapsel, die Mikrokapseln formt; und verkapseltem Material innerhalb der Kapsel, wobei das verkapselte Material aus einer herbizid wirksamen Menge an Clomazon besteht; wobei die Zusammensetzung eine Clomazon-Flüchtigkeit von weniger als fünfzig Prozent der Flüchtigkeit eines emulgierbaren Clomazonkonzentrats aufweist, wobei die Polyurea-Kapsel durch eine Grenzflächenpolymerisation von Polymethylenpolyphenylisocyanat und einem oder mehreren polyfunktionellen Aminen, die aus der Gruppe, bestehend aus Ethylendiamin (EDA), Diethyltriamin (DETA), Triethylentetramin (TETA) und 1,6-Hexandiamin (HDA), ausgewählt sind, unter der Voraussetzung, dass (EDA) lediglich in Gegenwart eines zweiten polyfunktionellen Amins verwendet wird.

29. Herbizide Zusammensetzung gemäß Anspruch 28, wobei das Polymethylenpolyphenylisocyanat und das polyfunktionelle Amin durch Emulgieren einer wässrigen Phase, die aus Wasser und einem Emulgator und einer nicht mit Wasser mischbaren Phase, die aus einem Isocyanat und Clomazon besteht, polymerisiert werden, und dem Hinzufügen von mindestens einem polyfunktionellen Amin, um die Mikrokapseln zu formen.

30. Herbizide Zusammensetzung gemäß einem der Ansprüche 28 oder 29, wobei das verkapselte Material ferner aus einem Kohlenwasserstofflösungsmittel besteht.

## Revendications

1. Un procédé destiné à la préparation de formulations efficaces d'un point de vue herbicide de clomazone ayant une volatilité inférieure à cinquante pour cent de la volatilité d'un concentré émulsifiable de clomazone contenant quatre livres de clomazone par gallon de formulation consistant à microencapsuler le clomazone par polymérisation interfaciale grâce aux étapes consistant :
a) à fournir une phase aqueuse contenant de 0,3 à 3,0 % en poids d'un ou de plusieurs émulsifiants ;
b) à fournir une phase non miscible à l'eau consistant en clomazone, en polyméthylène polyphényl isocyanate (PMPPI), et en un solvant hydrocarbure ; les proportions pondérales relatives de clomazone et de PMPPI étant dans la gamme allant de 1/1 à 6/1 ;
c) à émulsifier la phase non miscible à l'eau dans la phase aqueuse, ce qui forme une dispersion de gouttelettes non miscibles à l'eau dans toute la phase aqueuse ;
d) à agiter la dispersion tout en y ajoutant une solution aqueuse de 10 à 100 pour cent en poids d'au moins une amine polyfonctionnelle sélectionnée parmi l'éthylènediamine (EDA), la diéthyltriamine (DETA), la triéthylènetétramine (TETA) et la 1,6-hexanediamine (HDA), à condition que (EDA) soit seulement utilisée dans un mélange, les proportions pondérales relatives d'amine polyfonctionnelle et de PMPPI étant dans la gamme allant de 0,1/1 à 1/1, ce qui forme ainsi des microcapsules ayant une paroi formant coque en polyurée autour des gouttelettes non miscibles à l'eau ; et
e) à faire durcir les microcapsules en continuant à agiter la dispersion tout en la chauffant à une température comprise dans la gamme allant de 35° à 60 °C pour une durée de 3 à 10 heures afin de produire une formulation dans laquelle la taille moyenne des microcapsules est dans la gamme allant de 5 à 50 microns.

2. Un procédé tel que revendiqué dans la revendication 1, dans lequel l'émulsifiant est un alcool polyvinylique ; l'antimousse est un polydiméthylsiloxane ; les proportions relatives de clomazone et de PMPPI vont de 4,5/1 à 4,8/1 ; la polyamine est un mélange de TETA et de HDA dans lequel les proportions relatives de TETA et de HDA vont de 3/1 à 1/3 ; les microcapsules sont durcies entre 45° et 50 °C pendant 4 à 5 heures et ont une taille moyenne de 5 à 30 microns.

3. Un procédé tel que revendiqué dans la revendication 1 dans lequel l'émulsifiant est un alcool polyvinylique ; l'antimousse est un polydiméthylsiloxane ; les proportions relatives de clomazone et de PMPPI vont de 4,5/1 à 4,7/1 ; la polyamine est un mélange de DETA et de HDA dans lequel les proportions relatives de DETA et de HDA vont de 3/1 à 1/3 ; les microcapsules sont durcies entre 45° et 50 °C pendant 4 à 5 heures et ont une taille moyenne de 5 à 30 microns.

4. Un procédé tel que revendiqué dans la revendication 1 dans lequel les émulsifiants comprennent un alcool polyvinylique ; l'antimousse est un polydiméthylsiloxane ; les proportions relatives de clomazone et de PMPPI vont de 4,5/1 à 4,8/1 ; la polyamine est DETA, les microcapsules sont durcies entre 45° et 50 °C pendant 4 à 5 heures et ont une taille moyenne allant de 5 à 30 microns.

5. Un procédé tel que revendiqué dans la revendication 4, dans lequel les émulsifiants comprennent un alcool polyvinylique et un sel de sodium de condensat de naphtalène sulfoné.

6. Un procédé tel que revendiqué dans n'importe laquelle des revendications précédentes, dans lequel un ou plusieurs stabilisateurs sélectionnés parmi la gomme xanthane entre 0,05 et 0,30 % en poids, le propylèneglycol entre 0,75 et 6,5 % en poids, un ou plusieurs agents tensioactifs entre 0,5 et 6,0 % en poids et l'argile smectique entre 0,25 et 0,50 % en poids sont ajoutés à la formulation une fois l'étape de durcissement achevée afin de régler la viscosité pour qu'elle soit entre 1 700 et 3 800 cps et la capacité de suspension pour qu'elle soit supérieure à 70 %, chaque pourcentage en poids étant relatif au poids de la formulation après l'ajout des stabilisateurs.

7. Un procédé tel que revendiqué dans la revendication 6 dans lequel les quantités de stabilisateurs ajoutés sont de 0,05 à 0,3 % en poids de gomme xanthane et de 0,75 à 6,5 % en poids de propylèneglycol.

8. Un procédé tel que revendiqué dans n'importe laquelle des revendications précédentes consistant de plus:
f) à régler le pH de la dispersion de microcapsules durcies pour qu'il soit entre 6,5 et 9,0.

9. Un procédé tel que revendiqué dans n'importe laquelle des revendications précédentes dans lequel la phase aqueuse de l'étape
a) comprend de 0,02 à 0,20 % en poids d'un modificateurlstabilisateur de viscosité de gomme xanthane.

10. Un procédé tel que revendiqué dans la revendication 8, dans lequel la phase aqueuse de l'étape a) comprend de plus de 0,1 à 1,0 % en poids d'un antimousse.

11. Un procédé destiné à la préparation de formulations efficaces d'un point de vue herbicide de clomazone ayant une volatilité inférieure à cinquante pour cent de la volatilité d'un concentré émulsifiable de clomazone contenant quatre livres de clomazone par gallon de formulation consistant à microencapsuler le clomazone par polymérisation interfaciale grâce aux étapes consistant :
a) à fournir une phase aqueuse contenant de 0,5 à 3,0 % en poids d'un ou de plusieurs émulsifiants ;
b) à fournir une phase non miscible à l'eau consistant en clomazone, en polyméthylène polyphényl isocyanate (PMPPI), et en un solvant hydrocarbure ; les proportions pondérales relatives de clomazone et de PMPPI étant dans la gamme allant de 1/1 à 6/1 ;
c) à émulsifier la phase non miscible à l'eau dans la phase aqueuse, ce qui forme une dispersion de gouttelettes non miscibles à l'eau dans toute la phase aqueuse ;
d) à agiter la dispersion tout en y ajoutant au moins une amine polyfonctionnelle sélectionnée parmi la diéthyltriamine (DETA), la triéthylènetétramine (TETA) et la 1,6-hexanediamine (HDA), les proportions pondérales relatives d'amine polyfonctionnelle et de PMPPI étant dans la gamme allant de 0,1/1 à 1/1, ce qui forme ainsi des microcapsules ayant une paroi formant coque en polyurée autour des gouttelettes non miscibles à l'eau ; et
e) à faire durcir les microcapsules en continuant à agiter la dispersion tout en la chauffant à une température comprise dans la gamme allant de 35° à 60 °C pour une durée de 3 à 10 heures.

12. Un procédé tel que revendiqué dans la revendication 11, consistant de plus :
f) à régler le pH de la dispersion de microcapsules durcies pour qu'il soit entre 6,5 et 9,0.

13. Un procédé tel que revendiqué dans la revendication 11 ou la revendication 12, dans lequel la phase aqueuse de l'étape a) comprend de 0,05 à 0,20 % en poids d'un modificateur/stabilisateur de viscosité de gomme xanthane, et de 0,1 à 1,0 % en poids d'un antimousse.

14. Un procédé destiné à la préparation d'une composition efficace d'un point de vue herbicide de clomazone consistant :
à microencapsuler le clomazone par polymérisation interfaciale pour former une pluralité de microcapsules durcies comprenant une paroi formant coque en polyurée entourant de la matière encapsulée comprenant du clomazone,
dans lequel la volatilité du clomazone de ladite composition efficace d'un point de vue herbicide de clomazone est inférieure à cinquante pour cent de la volatilité d'un concentré émulsifiable de clomazone,
dans lequel ladite microencapsulation consiste :
à former une dispersion d'une pluralité de microcapsules non durcies, chacune comprenant une paroi formant coque en polyurée entourant une matière encapsulée comprenant du clomazone, en émulsifiant une phase aqueuse comprenant de l'eau et un émulsifiant et une phase non miscible à l'eau comprenant du polyméthylène polyphényl isocyanate (PMPPI) et du clomazone et en ajoutant au moins une amine polyfonctionnelle sélectionnée dans le groupe consistant en éthylènediamine (EDA), diéthyltriamine (DETA), triéthylènetétramine (TETA) et 1,6-hexanediamine (HDA), à condition que EDA soit seulement utilisée en présence d'une deuxième amine polyfonctionnelle.

15. Un procédé tel que revendiqué dans la revendication 14, dans lequel ladite microencapsulation consiste :
(1) à faire durcir ladite pluralité de microcapsules non durcies comprenant une paroi formant coque en polyurée entourant une matière encapsulée comprenant du clomazone pour former une pluralité de microcapsules durcies.

16. Un procédé tel que revendiqué dans la revendication 15, dans lequel ladite pluralité de microcapsules non durcies sont durcies en faisant chauffer lesdites microcapsules à une température allant de 35° à 60 °C pendant 3 à 10 heures.

17. Un procédé tel que revendiqué dans n'importe laquelle des revendications 14 à 16, dans lequel ladite phase aqueuse comprend de plus un antimousse et un modificateur/stabilisateur de viscosité.

18. Un procédé tel que revendiqué dans n'importe laquelle des revendications 14 à 17, dans lequel ladite phase non miscible à l'eau comprend de plus un solvant et ladite matière encapsulée comprend de plus un solvant hydrocarbure.

19. Un procédé tel que revendiqué dans n'importe laquelle des revendications 14 à 18, comprenant de plus l'étape consistant :
(b) à régler le pH de la composition pour qu'il soit entre 6,5 environ et 9,0 environ ; dans lequel l'étape (b) est menée après l'étape (a).

20. Une formulation herbicide préparée selon n'importe laquelle des revendications précédentes.

21. Une formulation herbicide contenant de 1 à 4 livres de clomazone par gallon de formulation et ayant une volatilité inférieure à cinquante pour cent de la volatilité d'un concentré émulsifiable de clomazone contenant quatre livres de clomazone par gallon de formulation, comprenant :
(a) une suspension aqueuse de microcapsules constituées d'une coque en polyurée entourant un noyau de clomazone et d'une quantité mineure d'un solvant hydrocarbure, la polyurée ayant été formée à partir de la réaction interfaciale du polyméthylène polyphényl isocyanate (PMPPI) avec l'éthylènediamine (EDA), la diéthylènetriamine (DETA), la triéthylènetétramine (TETA), ou la 1,6-hexanediamine (HDA), ou un mélange des amines polyfonctionnelles, à condition que EDA soit seulement utilisée dans un mélange ;
(b) de 0,2 à 1,00 % en poids d'alcool polyvinylique ;
(c) de 0,1 à 0,5 % en poids d'antimousse ; et
(d) de 0,75 à 7,0 % en poids de propylèneglycol, les microcapsules ayant une taille moyenne comprise dans la gamme allant de 5 à 50 microns et ayant une capacité de suspension supérieure à 70 %, une viscosité allant de 1 700 à 3 800 cps, et une analyse granulométrique par tamisage 100 par voie humide supérieure à 99,95 %.

22. Une formulation telle que revendiquée dans la revendication 21, contenant deux livres de clomazone par gallon de formulation, dans laquelle les proportions pondérales relatives de clomazone et de PMPPI vont de 4,5/1 à 4,8/1 et les amines polyfonctionnelles sont TETA et HDA, les proportions pondérales relatives de TETA et de HDA allant de 3/1 à 1/3.

23. Une formulation telle que revendiquée dans la revendication 21, contenant deux livres de clomazone par gallon de formulation, dans laquelle les proportions pondérales relatives de clomazone et de PMPPI vont de 4,5/1 à 4,8/1 et les amines polyfonctionnelles sont TETA et DETA, les proportions pondérales relatives de TETA et de DETA allant de 3/1 à 1/3.

24. Une formulation telle que revendiquée dans la revendication 21, contenant deux livres de clomazone par gallon de formulation, dans laquelle les proportions pondérales relatives de clomazone et de PMPPI vont de 4,5/1 à 4,8/1 et les amines polyfonctionnelles sont DETA et HDA, les proportions pondérales relatives de DETA et de HDA allant de 3/1 à 1/3.

25. Une formulation telle que revendiquée dans la revendication 21, contenant trois livres de clomazone par gallon de formulation, dans laquelle les proportions pondérales relatives de clomazone et de PMPPI vont de 4,5/1 à 4,8/1 et l'amine polyfonctionnelle est DETA.

26. Une formulation telle que revendiquée dans n'importe laquelle des revendications 20 à 25, dans laquelle le pH est réglé pour qu'il soit entre 6,5 et 9,0.

27. Une formulation herbicide telle que revendiquée dans n'importe laquelle des revendications 21 à 26, comprenant de plus :
e) de 0,07 à 0,30 % en poids de modificateurlstabilisateur de viscosité de gomme xanthane.

28. Une composition herbicide de clomazone microencapsulé comprenant :
une coque en polyurée formant des microcapsules ; et de la matière encapsulée au sein de ladite coque, ladite matière encapsulée comprenant une quantité efficace d'un point de vue herbicide de clomazone ; dans laquelle la volatilité du clomazone de ladite composition est inférieure à cinquante pour cent de la volatilité d'un concentré émulsifiable de clomazone, ladite coque en polyurée étant formée par une polymérisation interfaciale de polyméthylène polyphényl isocyanate et d'une ou plusieurs amines polyfonctionnelles sélectionnées dans le groupe consistant en éthylènediamine (EDA), diéthyltriamine (DETA), triéthylènetétramine (TETA), et en 1,6-hexanediamine (HDA), à condition que (EDA) soit utilisée seulement en présence d'une deuxième amine polyfonctionnelle.

29. Une composition herbicide telle que revendiquée dans la revendication 28, dans laquelle ledit polyméthylène polyphényl isocyanate et ladite amine polyfontionnelle sont polymérisés en émulsifiant une phase aqueuse comprenant de l'eau et un émulsifiant et une phase non miscible à l'eau comprenant un isocyanate et du clomazone, et en ajoutant au moins une dite amine polyfonctionnelle pour former lesdites microcapsules.

30. Une composition herbicide telle que revendiquée dans n'importe laquelle des revendications 28 ou 29, dans laquelle ladite matière encapsulée comprend de plus un solvant hydrocarbure.
